(19) **Europäisches Patentamt**

**European Patent Office**

**Office européen des brevets**

(11) Veröffentlichungsnummer : **0 327 615 B1**

(12) **EUROPÄISCHE PATENTSCHRIFT**

(45) Veröffentlichungstag der Patentschrift :
**02.01.92 Patentblatt 92/01**

(51) Int. Cl.⁵ : **B60T 8/44,** B60T 13/14

(21) Anmeldenummer : **88905797.2**

(22) Anmeldetag : **04.07.88**

(86) Internationale Anmeldenummer :
**PCT/EP88/00587**

(87) Internationale Veröffentlichungsnummer :
**WO 89/01890 09.03.89 Gazette 89/06**

(54) **BREMSDRUCKREGELVORRICHTUNG.**

(30) Priorität : **25.08.87 DE 3728307**
**19.02.88 DE 3805218**

(43) Veröffentlichungstag der Anmeldung :
**16.08.89 Patentblatt 89/33**

(45) Bekanntmachung des Hinweises auf die
Patenterteilung :
**02.01.92 Patentblatt 92/01**

(84) Benannte Vertragsstaaten :
**DE FR GB**

(56) Entgegenhaltungen :
**DE-A- 2 942 979**
**DE-A- 3 028 894**
**DE-A- 3 540 232**
**GB-A- 2 194 010**

(73) Patentinhaber : **ALFRED TEVES GmbH**
**Guerickestrasse 7 Postfach 119 155**
**W-6000 Frankfurt am Main (DE)**

(72) Erfinder : **KIRCHER, Dieter**
**Kreisstrasse 51**
**W-6368 Dortelweil (DE)**
Erfinder : **WUPPER, Hans**
**Eichäckerstra e 10A**
**W-6382 Friedrichsdorf (DE)**
Erfinder : **VOLZ, Peter**
**In den Wingerten 14**
**W-6100 Darmstadt (DE)**

(74) Vertreter : **Grau, Ulf**
**c/o ALFRED TEVES GMBH Guerickestrasse 7**
**W-6000 Frankfurt (M) 90 (DE)**

**Beschreibung**

Die Erfindung betrifft eine Bremsdruckregelvorrichtung, insbesondere Antiblockierregelvorrichtung, Antriebsschlupfregelvorrichtung, Anfahrschlupfregelvorrichtung für hydraulische Bremsanlagen von Kraftfahrzeugen, bestehend aus einem Hauptzylinder mit mindestens einem Arbeitskolben, (Druckstangenkolben und/oder schwimmender Kolben) und mindestens einem Arbeitsraum, einem Vorratsbehälter für Druckmittel, einem Druckmodulator für die Veränderung des hydraulischen Drucks in den Radzylindern der Radbremsen während des Bremsdruckregelmodus, wobei der Druckmodulator Ein- und Auslaßventile für die Radzylinder umfaßt, einem elektronischen Regler für die Steuerung der Ventile des Modulators, mindestens einer motorgetriebenen Pumpe zur Erzeugung eines hydraulischen Drucks, wobei im Bremsdruckregelmodus der Arbeitsraum des Hauptzylinders mit Pumpendruck beaufschlagt wird und der Arbeitskolben des Hauptzylinders infolge des Pumpendrucks in Richtung auf seine Grundstellung bewegbar ist, wobei in mindestens einem Arbeitskolben ein Regelventil vorgesehen ist, das im Bremsdruckregelmodus den Druckmittelstrom im hydraulischen Umlaufsystem, bestehend aus Pumpe, Arbeitsraum des Hauptzylinders, Vorratsbehälter, regelt (Druckmittelstromregelung).

Bremsdruckregelvorrichtungen, insbesondere in Form von Antiblockiersystemen finden in immer größerer Stückzahl Anwendung in der Kraftfahrzeugindustrie. Dabei werden bei bestimmten Kategorien dieser Antiblockiersysteme Hydraulikpumpen zur Erzeugung eines Hilfsdrucks im Regelmodus eingesetzt.

Eine derartige Antiblockiervorrichtung ist beispielsweise durch die DE-OS 3641712.2 bekannt geworden.

Dort wird ein Ventil für eine Bremsanlage mit Schlupfregelung, mit einem pedalbetätigten, vorzugsweise hilfskraftunterstützten Bremsdruckgeber, mit einem Hauptzylinder, an den über Hauptbremsleitungen die Radbremsen angeschlossen sind, mit hydraulischen Hilfsdruckpumpen sowie mit Radsensoren und elektronischen Schaltkreisen zur Ermittlung des Raddrehverhaltens und zur Erzeugung von elektrischen Bremsdrucksteuersignalen, mit denen zur Schlupfregelung in die Druckmittelleitungen eingefügte elektromagnetisch betätigbare Druckmitteleinlaßventile und -auslaßventile steuerbar sind, wobei die Kolben des Hauptzylinders Ventile aufweisen, die in der Bremslösestellung Druckmittelverbindungen zwischen dem Druckmittelvorratsbehälter und den Druckkammern öffnen und in der Bremsstellung diese Druckmittelverbindungen schließen, beschrieben.

Das Besondere dieser Vorrichtung besteht darin, daß in den Kolben des Hauptzylinders angeordnete Ventile jeweils einen in einer Ausnehmung längsverschiebbaren Ventilkörper aufweisen, der jeweils mit einem Öffnungsglied beispielsweise einem Stößel zusammenwirkt, derart, daß der Stößel den Ventilkörper in seine Öffnungsstellung bewegt, wenn der jeweilige Kolben sich in der Lösestellung befindet, wobei sich der Stößel an einem ortsfesten Zapfen, Querglied oder Bolzen abstützt, und wobei jede Ausnehmung jeweils auf der der Druckkammer zugewandten Seite durch ein Topfteil verschlossen ist, das der Abstützung der jeweiligen Ventilschließfeder dient.

Bei Bremsdruckregelvorrichtungen des beschriebenen, bekannten Typs wird durch den Pumpendruck das Bremspedal während des Regelmodus in seiner Ausgangposition zurückgeschoben. Dies wird vielfach nicht gewünscht. Durch dieses Zurückschieben wird der Bedienungskomfort für den Fahrer verschlechtert.

Der Erfindung liegt die Aufgabe zugrunde, eine Bremsdruckregelvorrichtung zu schaffen, bei der das Bremspedal im Regelmodus nicht in die Ausgangsposition zurückgeschoben wird.

Dabei soll es auch möglich sein, mehrere Positionen des Bremspedals vor dessen Ausgangsstellung zu erzielen. Außerdem soll grundsätzlich das Pedalgefühl während des Regelmodus verbessert werden.

Diese Verbesserungen sollen mit möglichst einfachen Mitteln erzielt werden, die Lösung der Aufgabe soll kostengünstig sein.

Es sollen nur wenige und ausfallsichere Teile erforderlich sein.

Zusätzliche Sensoren sollen sich erübrigen. Ein Eingriff in den Bremskraftverstärker soll nicht erforderlich sein.

Die Aufgabe wird erfindungsgemäß dadurch gelöst, daß Mittel vorgesehen sind, die im Bremsdruckregelmodus die Schaltpositionen des im Arbeitskolben (Druckstangenkolben und/oder Schwimmkolben) untergebrachten Regelventils in den Hauptzylinder hinein verschieben.

Es sind Regelventile bekannt, die als Zentralregelventil im Arbeitskolben untergebracht sind und aus einem Ventilsitz, einem Ventilschließkörper, einem auf den Ventilschließkörper wirkenden, das Regelventil öffnenden Stößel und einem Anschlag für den Stößel bestehen.

Bei Bremsdruckregelvorrichtungen der eingangs beschriebenen Art, die mit dem soeben beschriebenen Regelventil ausgerüstet sind, wird zur Lösung der gestellten Aufgaben vorgeschlagen, daß der Anschlag für den Stößel im Bremsdruckregelmodus um bestimmte Strecken aus seiner Grundstellung in den Hauptzylinder hinein bewegbar angeordnet ist, so daß im Bremsdruckregelmodus die Druckmittelstromregelung im hydraulischen Umlaufsystem bei Stellungen des Arbeitskolbens stattfindet, die in den Hauptzylinder hinein verlagert sind.

In weiterer Ausgestaltung der Erfindung werden hydraulische, elektromagnetische, pneumatische oder mechanische Betätigungsmittel vorgesehen, die den Anschlag für den Stößel in Richtung in den Hauptzylinder hinein mit Abstand vor seiner Grundstellung positionieren.

Beim Einsatz eines hydraulischen Betätigungsmittels, insbesondere einer hydraulischen Kolbenzylindereinheit, kann der Pumpendruck zur Druckbeaufschlagung eingesetzt werden.

In einer bevorzugten Ausführungsform wird vorgeschlagen, daß der Anschlag für den Stößel aus einer Anschlagvorrichtung besteht, die einen beweglichen direkten Anschlagkörper und einen beweglichen indirekten Anschlagkörper umfaßt.

Der bewegliche indirekte Anschlagkörper kann dabei einerseits durch den Pumpendruck und andererseits durch die Kraft eines Federelements positionierbar angeordnet sein.

In weiterer Ausgestaltung dieses Gedankens kann im Hauptzylinder ein gesonderter Druckraum vorgesehen sein, der durch den beweglichen indirekten Anschlagkörper begrenzt und in seinem Volumen veränderbar ist. Der bewegliche indirekte Anschlagkörper kann dabei als Kolben ausgebildet sein, der durch den Pumpendruck gegen die Kraft einer Feder verschiebbar ist.

Bei Bremsdruckregelvorrichtungen, die als integralen Bestandteil einen Bremskraftverstärker, insbesondere einen sogenannten "Vakuumbremskraftverstärker" umfassen, kann in einem Ausführungsbeispiel vorgesehen sein, daß der erwähnte gesonderte Druckraum im Hauptzylinder aus dem Hauptzylindergehäuse, dem beschriebenen verschiebbaren Kolben und dem Kraftübertragungselement des Bremskraftverstärkers gebildet werden.

Bei einer Gruppe von weiteren Ausführungsbeispielen der Erfindung wird ein mechanisches Sperraggregat vorgesehen, das den Anschlag für den Stößel im Bremsdruckregelmodus in bestimmten Stellungen vor der Grundstellung positioniert.

Das Sperraggregat wird durch eine Arretiervorrichtung in einer oder mehreren Positionen vor der Grundposition arretiert und besteht aus einer im Hauptzylinder untergebrachten Hülse mit einem Anschlagelement für den Stößel des Regelventils, wobei das Anschlagelement vorzugsweise aus einer quer zur Achse des Hauptzylinders angeordneten, insbesondere stiftförmig ausgebildeten, Bauteil (Querglied) besteht, das innerhalb der Hülse angeordnet ist.

Die Arretiervorrichtung kann im Hauptzylindergehäusen insbesondere radial gegen die Hülse verschiebbar, angeordnet sein und entweder kraftschlüssig, beispielsweise durch Verklemmen, oder formschlüssig, beispeisweise durch ein Profil, die Hülse in einer oder in mehreren Positionen arretieren.

Für ein formschlüssiges Arretieren kann ein sägezahnförmiges Außenprofil der Hülse vorgesehen sein.

In einer besonderen Ausführungsform besteht die Arretiervorrichtung aus einem Kolben, der in der Hauptzylinderwand geführt und durch eine hydraulische Kolbenzylindereinheit verschiebbar ist. Die Kolbenzylindereinheit kann dabei durch das Druckmittel der Pumpe im Bremsdruckregelmodus beaufschlagt werden.

In einem weiteren Ausführungsbeispiel wird die als Kolben ausgebildete Arretiervorrichtung durch eine elektromagnetische Hubeinheit, insbesondere durch einen Magneten verschoben. Die Hubeinheit kann durch den elektronischen Regler der Bremsdruckregelvorrichtung gesteuert werden.

Die als Kolben ausgebildete Arretiervorrichtung kann in einem weiteren Ausführungsbeispiel durch einen pneumatischen Übersetzer gegen die Hülse verschoben werden. Der pneumatische Übersetzer nutzt die Differenz des atmosphärischen Drucks einerseits und des Unterdrucks im Ansaugstutzen des Verbrennungsmotors des Kraftfahrzeugs oder einer Vakuumpumpe andererseits aus, und zwar zur Erzeugung einer translatorischen Kraft, die auf den Kolben wirkt. Der pneumatische Übersetzer kann durch den elektronischen Regler der Bremsdruckregelvorrichtung gesteuert werden.

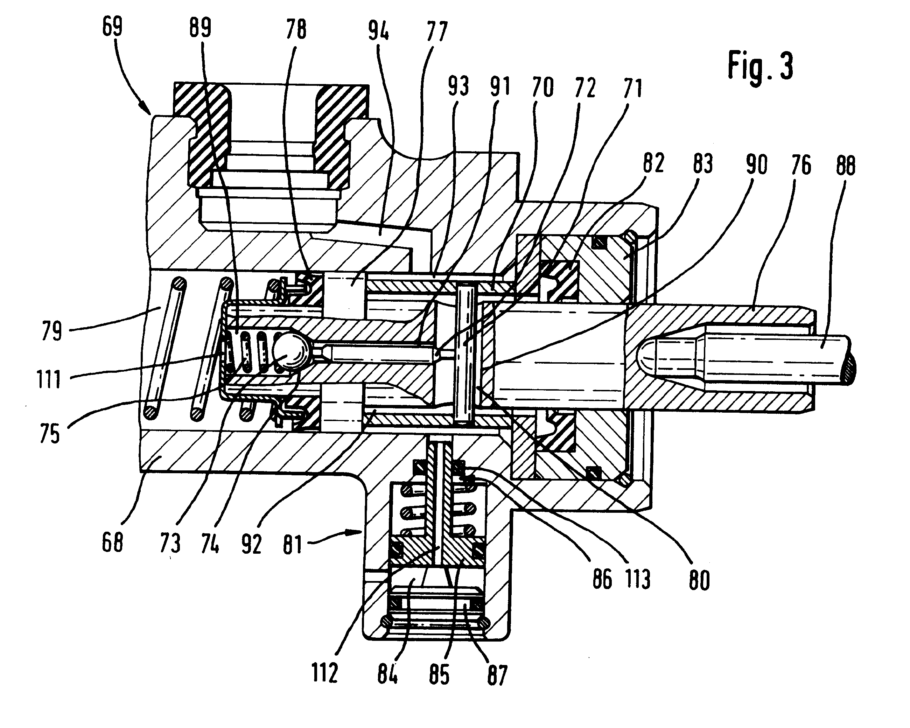

Die oben erläuterte Anordnung von Sperraggregat und Arretiervorrichtung, insbesondere nach den Ausführungsbeispielen gemäß Figuren 3, 4, 5, kann für den Druckstangenkolben oder für den Schwimmkolblen eines Tandemhauptzylinders oder für beide Kolben vorgesehen sein.

Mit der Erfindung werden folgende Vorteile erreicht :

Die geschilderten Nachteile des Standes der Technik werden vermieden und die vielfältigen Forderungen der Aufgabenstellung erfüllt. Mit sehr einfachen Mitteln wird kostengünstig erreicht, daß eine oder mehrere Schaltpositionen des Regelventils erreicht werden, die in den Hauptzylinder hinein verlagert angeordnet sind.

Weitere Einzelheiten der Erfindung sind der folgenden Beschreibung mehrerer Ausführungsbeispiele der Erfindung zu entnehmen. Diese Ausführungsbeispiele werden anhand von fünf Figuren erläutert.

Figur 1 zeigt eine Antiblockierregelvorrichtung mit einem Vakuumbremskraftverstärker.

Figur 2 zeigt ein Ausführungsbeispiel der Erfindung.

Figur 3 zeigt in Schnittdarstellung ein zweites Ausführungsbeispiel.

Figuren 4 und 5 zeigen weitere Ausführungsbeispiele.

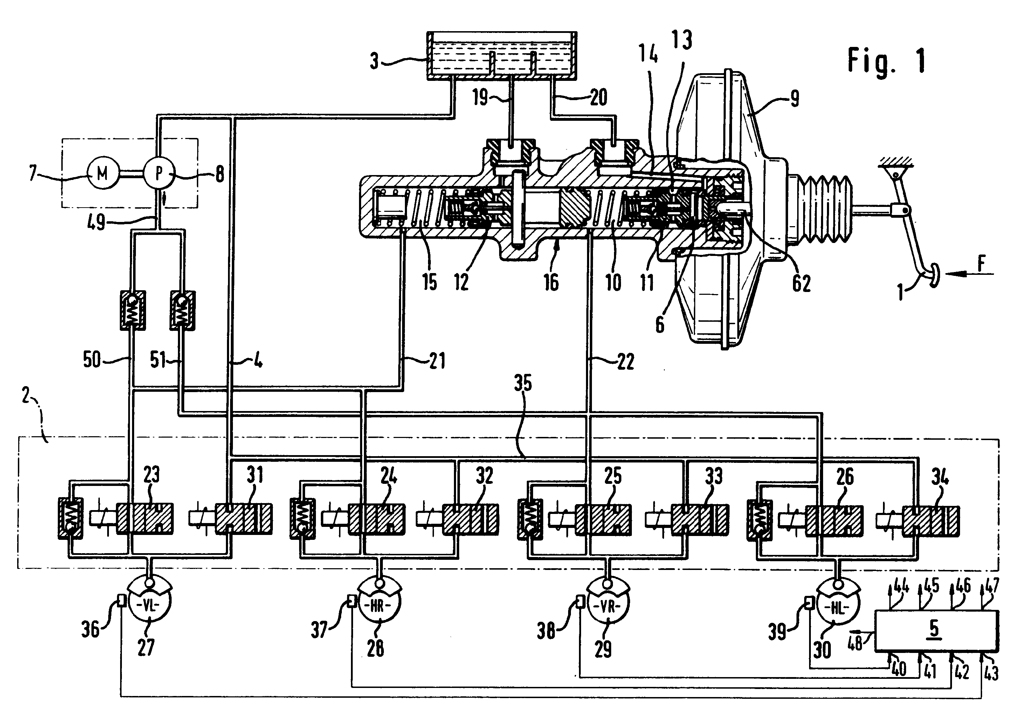

Die Vorrichtung nach Figur 1 ist als Stand der Technik anzusehen, sie umfasst folgende Aggregate:

einen vom Bremspedal 1 betätigten Vakuumbremskraftverstärker 9, einen Tandemhauptzylinder 16, einen Modulator 2 für die Druckregelung im Antiblockiermodus, einen elektronischen Regler 5 zur Verarbeitung von Sensorsignalen und eine Hydraulikdruckpumpe 8, die von einem Elektromotor 7 angetrieben wird.

In Figur 1 ist die Anlage in Lösestellung gezeigt. Die Druckkammern 10, 15 des Hauptzylinders sind in bekannter Weise über offene Zentralregelventile, über Anschlußkanäle im Innern der Kolben sowie über eine Ringkammer im Zwischenkolben, über Bohrungen und über hydraulische Leitungen 19, 20 mit dem Druckmittelvorratsbehälter 3 verbunden.

Die beiden Druckkreise 21, 22 des Hauptzylinders sind über elektromagnetisch betätigbare, in der Grundstellung auf Durchlaß geschaltete Ventile, sogenannte "Stromlos- Offen-Ventile" (SO-Ventile) oder Einlaßventile 23, 24, 25, 26 mit den Radbremsen 27, 28, 29, 30 verbunden.

Die parallel geschalteten Radbremsen 27, 28 beziehungsweise 29, 30, sind den diagonal angeordneten Druckkreisen (Bremskreisen) 21, 22 zugeordnet. Für die Anordnung der zu den genannten Bremsen korrespondierenden Fahrzeugrädern wurden folgende Kurzbezeichnungen benutzt : VL für vorn links, HR für hinten rechts, VR für vorn rechts, HL für hinten links. Die Radbremsen 27, 28, 29, 30 sind außerdem über elektromagnetisch betätigbare, in der Grundstellung sperrende Ausgangsventile 31, 32, 33, 34, sogenannte "Stromlos-Geschlossen-Ventile" (SG-Ventile), über eine hydraulische Rückflußleitung 35, und über die Leitung 4 an den Vorratsbehälter oder Druckausgleichsbehälter 3 anschließbar. Die Fahrzeugräder sind mit elektrischen Sensoren 36, 37, 38, 39 ausgerüstet, die mit synchron zur Radumdrehung mitlaufenden Zahnscheiben zusammenwirken und elektrische Signale erzeugen, die das Raddrehverhalten, das heißt die Radumfangsgeschwindigkeit und Änderungen dieser Geschwindigkeit, erkennen lassen. Diese Signale werden über die Eingänge 40, 47, 42, 43 dem elektronischen Regler 5 zugeführt. Der elektronische Regler verarbeitet die Sensorsignale aufgrund eines in ihm gespeicherten Regelalgorithmus zu Ausgangssignalen (Bremsdrucksteuersignale), mit denen im Bremsdruckregelmodus, die SO-Ventile und SG-Ventile geschaltet werden, wodurch in den einzelnen Radzylindern der Scheibenbremsen entsprechend dem Regelalgorithmus die Bremsdrücke abgebaut, konstant gehalten oder wieder erhöht werden. Über die Ausgänge 44, 45, 46, 47 des elektronischen Reglers werden hierzu die Betätigungsmagnete der SO-Ventile und SG-Ventile angesteuert. Die elektrischen Verbindungsleitungen zwischen den Ausgängen 44, 45, 46, 47 und den Wicklungen der SO- und SG-Ventile sind in den Figuren nicht dargestellt. Im Bremsdruckregelmodus wird der Elektromotor 7 der Pumpe 8 in Betrieb gesetzt.

Das Einschaltsignal erhält der Motor vom Ausgang 48 des elektronischen Reglers 5. Die Pumpe baut im Regelmodus Druck in den Druckleitungen 49, 50, 51 auf. Diese Leitungen stellen eine Druckmittelführung dar, die mit der Druckmittelführung des Tandemhauptzylinders, in Form der Druckleitungen 21, 22, verbunden ist. Im Regelmodus werden also die Druckräume 10, 15 des Tandemhauptzylinders durch die Pumpe unter Druck gesetzt.

Bei Bremsbetätigung im Normalbremsmodus wird die Pedalkraft F, unterstützt durch den Unterdruck im Verstärker 9 auf die Hauptzylinderkolben übertragen. Die zentralen Regelventile in diesen Kolben schließen, so daß sich nunmehr in den Druckkammern 10, 15 und damit in den Bremskreisen 21, 22 Bremsdruck aufbauen kann, der über die SO-Ventile 23, 24, 25, 26 zu den Radbremszylindern gelangt. Wird nun mit Hilfe der Sensoren 36, 37, 38, 39 und des elektronischen Reglers 5 eine Blockiertendenz an einem oder mehreren Rädern erkannt, setzt der Antiblockierregelmodus ein. Der Antriebsmotor 7 der Pumpe 8 schaltet sich ein, wodurch in den Druckleitungen 49, 50, 51 Druck aufgebaut wird, der einerseits über die SO-Ventile auf die Radzylinder der Radbremsen einwirkt und andererseits die Druckkammern des Hauptzylinders mit Druck, wie dargestellt, beaufschlagt. Entsprechend dem Regelalgorithmus führen weitere Signale des elektronischen Reglers zur Umschaltung der elektromagnetisch betätigbaren SO- und SG-Ventile.

Infolge des Pumpendrucks in den Arbeitskammern 10 und 15 werden die Arbeitskolben 11 und 12 in der Figur 1 nach rechts verschoben. Der Druckstangenkolben 11 fährt bei den Bremskraftverstärkern des Standes der Technik bis an seinen rechten Anschlag 6 (Figur 1). Dadurch wird das Bremspedal 1 zurückgestellt, es nimmt seine Grundposition ein. Der Fuß des Fahrers tritt also gegen ein zurückgestelltes Pedal.

In dieser Position öffnen die Zentralventile des Druckstangenkolbens 11 und des Zwischenkolbens 12. Druckmittel kann über diese Zentralventile in an sich bekannter Weise über die Rückflußleitungen 19 und 20 in den Vorratsbehälter 3 zurückfließen.

Beim Zwischenkolben geschieht dies über den drucklosen Ringraum des Zwischenkolbens. Beim Druckstangenkolben geschieht dies über den drucklosen Nachlaufraum 13, die Nachlaufbohrung 14 in die Rückflußleitung 20. Während des gesamten Regelmodus werden die Arbeitskolben in der Grundposition gehalten. Ebenso wird das Bremspedal während des gesamten Regelmodus in seiner Ausgangsstellung gehalten.

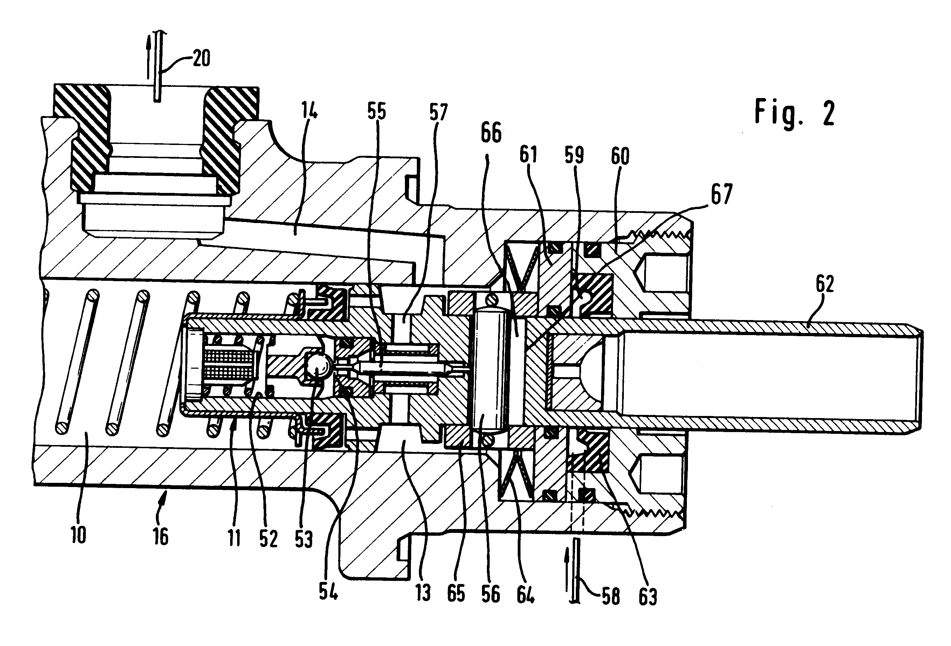

In Figur 2 ist der Hauptzylinder im Bereich des Druckstangenkolbens genauer dargestellt.

Der Druckstangenkolben ist in seiner Gesamtheit mit 11 bezeichnet. 10 ist die Arbeitskammer, die vom Druckstangenkolben unter Druck gesetzt wird. 13 ist der drucklose Nachlaufraum, der über die Leitungen 14 und 20 mit dem Vorratsbehälter in Verbindung steht.

Der Druckstangenkolben 11 weist eine innere Bohrung 52 auf. In dieser Bohrung ist das Zentralventil, bestehend aus kugelförmigem Schließkörper 53 und Ventilsitz 54, angeordnet.

Wenn infolge des Pumpendrucks in der Arbeitskammer 10 der Druckstangenkolben in der Figur 2 nach rechts verschoben wird, kommt der Stößel 55 zur Anlage am Querstift 56.

Der Stößel hebt den kugelförmigen Schließkörper 53 vom Ventilsitz 54 ab, so daß Druckmittel aus der Druckkammer 10 durch das Zentralventil und die Radialbohrungen 57 in den Raum 13 gelangen kann und von dort über die Leitungen 14 und 20 in den Vorratsbehälter.

Beim Stand der Technik geschah dies in der rechten Endstellung des Druckstangenkolbens. Das Bremspedal wurde also beim Stand der Technik vollständig in seine Grundstellung zurückgeführt. Beim Ausführungsbeispiel der Erfindung gemäß Figur 2 wird nun vorgesehen, daß über eine Druckleitung 58 Pumpendruck in den Druckraum 59 geleitet wird.

Es kann sich bei der Leitung 58 um eine außenliegende Leitung handeln oder um eine Leitung, die aus Bohrungen im Hauptzylindergehäuse besteht.

Der Druckraum wird gebildet aus dem Hauptzylinderboden 60, dem Hauptzylindergehäuse 16, dem Kolben 61 und der Druckstange 62 des Vakuumbremskraftverstärkers 9. Zur Abdichtung des Druckraums ist die Dichtung 63 vorgesehen.

Im Normalbremsmodus wird der Druckstangenkolben 11 nach links in den Hauptzylinder hinein verschoben.

Setzt nun der Bremsdruckregelmodus ein, wird der Raum 59 unter Pumpendruck gesetzt. Durch den Pumpendruck verschiebt sich der Kolben 61 in Figur 2 nach links.

Hierdurch wird die Feder 64 zusammengedrückt. Über das hülsenförmige Distanzstück 65 wird der Anschlagstift für den Stößel 55, beziehungsweise Querstift 56, im Regelmodus nach links bewegt.

Wie aus Figur 2 ersichtlich, ist der Querstift oder Anschlägstift 56 quer in einer Ausnehmung 66 im Druckstangenkolben angeordnet.

Im Bremsdruckregelmodus, d.h. bei Druckbeaufschlagung des Raums 59 bewegt sich der Querstift 56 von der hinteren Wand 67 der Ausnehmung 66 im Druckstangenkolben fort in Richtung auf das rechte Ende des Stößels 55.

Schließlich schlägt der Querstift 56 als Anschlag an den Stößel 55 an.

Es wird also im Regelmodus ein Öffnen des Zentralventils durch den Stößel 55 vor der rechten Grundstellung des Arbeitskolbens erreicht.

Die Position des Druckstangenkolbens im Hauptzylinder ist gegenüber seiner Ausgangslage in den Hauptzylinder hinein verlagert.

Es setzt nun die an sich bekannte Regelfunktion des Ventils 53, 54 ein, und zwar nunmehr im Bremsdruckregelmodus, zum Beispiel im Antiblockierregelmodus, in einer Position des Druckstangenkolbens, die gegenüber der Grundposition des Druckstangenkolbens in den Hauptzylinder hinein verschoben angeordnet ist.

Das Bremspedal, das wirkungsmäßig mit dem Druckstangenkolben durch den Vakuumbremskraftverstärker und durch das Pedalwerk verbunden ist, wird also im Regelmodus nicht in seine extreme Ausgangsposition zurück bewegt. Das Bremspedal bleibt bei Betätigung in Positionen stehen, die vor der Ausgangsposition liegen.

Durch diese verlagerten Positionen wird das Bremspedalgefühl für den Fahrer im Regelmodus deutlich verbessert.

Bei der Feder 64 handelt es sich um eine Feder geringerer Bauhöhe. Beispielsweise kann eine Tellerfeder mit entsprechender Kennlinie eingesetzt werden. Die Bewegung des Kolbens 61 nach links ist deshalb möglich, weil auf seiner rechten Seite Pumpendruck herrscht, während von links lediglich die Kraft der entsprechend auszulegenden Feder 64 wirkt. Im übrigen herrscht links vom Kolben 61 kein hydraulischer Druck, da der Nachlaufraum 13, wie dargestellt, drucklos ist.

In Figur 3 ist mit 68 der Teil eines Hauptzylindergehäuses dargestellt, der ein mechanisches Sperraggregat für den Stößel 72 des Zentralregelventils und eine Arretiervorrichtung zur Positionierung des Sperraggregats beherbergt.

Innerhalb des Hauptzylinders, der in seiner Gesamtheit mit 69 bezeichnet ist, ist eine Hülse 70 untergebracht. Diese Hülse weist einen Querstift 71 auf. Der Querstift dient als Anschlag für den Stößel 72 des Regelventils. Hülse mit Querstift sperren also den Stößel, wenn dieser sich infolge einer Rechtsbewegung des Arbeitskolbens ebenfalls nach rechts bewegen will. Die als Sperraggregat ausgebildete Anordnung von Hülse 70 und Ruerstift 71 kann in mehreren Positionen links von ihrer Grundstellung durch den als Arretiervorrichtung dienenden Kolben 86 arretiert werden.

Das Regelventil selbst besteht aus einer Kugel 73 und einem Ventilsitz 74. Die Kugel steht unter dem Druck der Feder 75. Die Kugel ist, wie aus Figur 3 ersichtlich, durch den Stößel vom Ventilsitz abhebbar.

In Figur 3 ist ein Kolbenschaft 76 und ein Kolbenende dargestellt. Das Kolbenende 77 weist eine Dichtung 78 auf, die den Arbeitsraum 79 des Hauptzylinders abdichtet. Im Kolbenschaft 76 ist eine Ausnehmung 80 vorgesehen. Der Querstift 71 ist innerhalb dieser Ausnehmung angeordnet. Das Kolbenende 77 dient als Anschlag für die Hülse 70. Bei Bremslösung, das heißt beim Zurückfahren des Kolbenendes in die rechte Grundposition, nimmt das Kolbenende die Hülse 70 in Richtung nach rechts mit.

Der Hauptzylinder besitzt einen Gehäuseansatz 81 der zylinderförmig ausgebildet ist, sowie einen mit einer Dichtung 82 versehenen Verschlußkörper 83.

Im zylinderförmig ausgebildeten Ansatz 81 ist eine hydraulische Kolbenzylindereinheit untergebracht. Der Zylinder wird durch den Druckraum 84 gebildet. Der Kolben ist als Übersetzerkolben 85 ausgebildet. Er übersetzt den im Raum 84 während des Regelmodus herrschenden Pumpendruck in eine Kraft, die auf das als Kolben 86 ausgebildete Ende der Kolbenstange des Übersetzerkolbens einwirkt. 87 ist ein Verschlußstück zur Abdichtung des Raums 84. Der Kolben 86 ist mit der Dichtung 113 versehen.

Nachfolgend die Beschreibung der Arbeitsweise des Ausführungsbeispiels gemäß Figur 3.

Die durch den Bremskraftverstärker verstärkte Fußkraft wirkt auf die Druckstange 88 in Richtung nach links. Die Druckstange verschiebt den Kolben, bestehend aus Kolbenschaft und Kolbenende, nach links.

Die Position des Kolbenschafts beziehungsweise Kolbenendes ist maßgebend für die Stellung des Pedals.

Im Normalbremsmodus wird beim Verschieben des Kolbenendes nach links im Arbeitsraum Druck aufgebaut. Dieser Druck herrscht auch im Raum 89, der mit dem Arbeitsraum durch die Öffnung 111 hydraulisch verbunden ist. Durch den steigenden Druck im Raum 79 wird die Kugel 73 auf den Ventilsitz gepreßt.

Bei einer weiteren Bewegung des Kolbenschafts nach links kommt die hintere Wand 90 der Ausnehmung 80 des Kolbenschafts zur Anlage an den Querstift. Querstift und Hülse 70 werden dadurch nach links in den Hauptzylinder hinein bewegt.

Im Normalbremsmodus herrscht genügend Abstand zwischen Querstift 71 und Stößel 72 des Zentralventils. Der Druckaufbau im Hauptzylinder kann also entsprechend der Pedalkraft durchgeführt werden.

Nachdem die Hülse 70 über eine bestimmte Strecke durch das Anliegen der hinteren Wand 90 an den Querstift 71 und damit durch den Kolbenschaft 76 in den Hauptzylinder hinein bewegt worden ist, soll nunmehr zur weiteren Beschreibung der Arbeitsweise angenommen werden, daß ein Antiblockierregelmodus einsetzt.

Im Regelmodus wird der Arbeitsraum 79 mit Pumpendruck beaufschlagt. Hierdurch wird der Arbeitskolben, bestehend aus Kolbenende und Kolbenschaft, nach rechts bewegt.

Gleichzeitig wird die Hülse 70 durch den Kolben 86 arretiert, d.h. die Hülse wird in ihrer momentanen, in den Zylinder hinein geschobenen Position festgelegt.

Die Arretierung der Hülse in ihrer hinein geschobenen Position erfolgt wie folgt :

Unter der Wirkung des hydraulischen Drucks im Raum 84 wird der Kolben 86 radial gegen die Hülse gepreßt und verklemmt sie im Hauptzylindergehäuse. Damit nimmt der Querstift 71 eine festgelegte Position ein, die vor der Grundstellung liegt. Der Querstift als Anschlag für den Stößel 72 ist also im Regelmodus in den Zylinder hinein bewegt und dort positioniert worden.

Wie dargestellt, bewegt sich der Arbeitskolben, bestehend aus Kolbenende und Kolbenschaft, im Regelmodus nach rechts. Der Stößel 72 fährt gegen den als Anschlag dienenden Querstift 71. Der am Anschlag stehende Stößel 72 hebt die Kugel 73 vom Ventilsitz 74. Druckmittel kann also aus dem Arbeitsraum 79, über die Öffnung 111, durch den Raum 89, zwischen Kugel und Ventilsitz, durch den Kanal 91, die Ausnehmung 80, den inneren Ringraum 92, in den äußeren Ringraum 93 gelangen. Innerer und äußerer Ringraum sind hydraulisch miteinander verbunden. Vom äußeren Ringraum fließt Druckmittel durch den Kanal 94 zum drucklosen Vorratsbehälter, siehe Figur 1.

Es findet zwischen Kugel und Ventilsitz ein Regelvorgang statt. Der Arbeitskolben bleibt dabei in einer in den Hauptzylinder hinein verschobenen Position stehen.

Arbeitskolben und Bremspedal stehen bekanntlich durch den Bremsdruckverstärker bzw. das Pedalwerk in Verbindung miteinander. Damit wird auch das Bremspedal nicht in seine Endposition zurückgeführt.

Während des Regelmodus findet die Druckentlastung des Arbeitsraums 79 wie folgt statt :

Entsprechend dem im elektronischen Regler installierten Regelalgorithmus werden die SO- und SG-Ventile des Druckmodulators geschaltet. Dadurch fließt Druckmittel über den Druckmodulator in den Vorratsbehälter zurück.

Durch das regelnde Zentralventil im Arbeitskolben des Hauptzylinders fließt Druckmittel über die Leitung 94 in den Vorratsbehälter.

Durch die Drosselbohrung 112 im Arretierkolben 86 fließt im Relgelmodus eine gewisse Menge ab.

Wenn der Regelmodus beendet wird, entleert sich der Druckraum 79 wie folgt :

Über die Drosselbohrung 112 fließt Druckmittel ab. Außerdem fließt durch den Kanal 94 Druckmittel in den Vorratsbehälter.

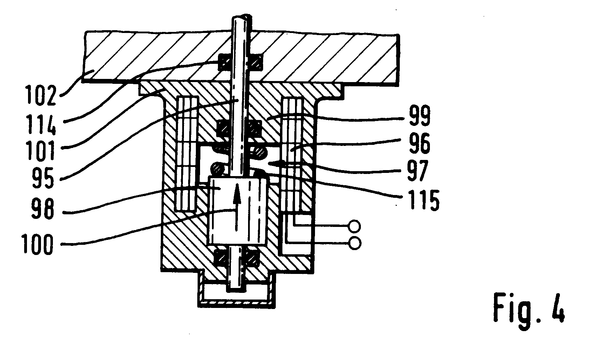

In Figur 4 ist ein Hubmagnet dargestellt, der den als Arretiervorrichtung dienenden und mit der Dichtung 114 versehenen Kolben 95 gegen die Hülse 70 preßt. Der Hubmagnet kann durch den elektronischen Regler der Bremsdruckregelvorrichtung gesteuert werden. Der Hubmagnet ist mit seinem Gehäuse 101 am Hauptzylindergehäuse 102 befestigt.

Wenn aufgrund eines Signals des Reglers die Spule 96 erregt wird, werden die sich im Luftspalt 97 gegenüberliegenden Stirnflächen des Ankers 98 und des Polkerns 99 polarisiert. Die dadurch entstehende Anziehungskraft bewegt den Anker in Richtung des Pfeils 100. Auf den Kolben 95 wird die Anpresskraft für die Arretierung der Hülse übertragen. Die Rückstellung der Arretiervorrichtung, das heißt des Kolbens 95 der Figur 4, erfolgt durch ein Strom-Aus-Signal des elektronischen Reglers. Dadurch fällt die Erregung der Magnetspule fort und die Feder 115 stellt den Kolben 95 zurück.

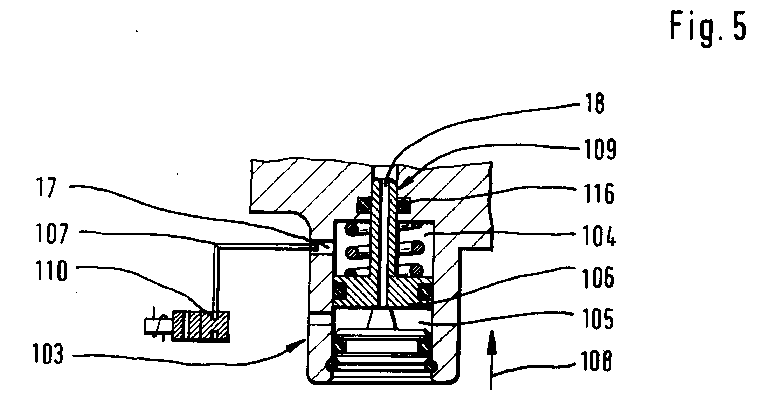

In Figur 5 ist ein Hauptzylindergehäuseansatz 103 gezeigt, der einen Zylinder aufweist. Im Zylinder sind untergebracht ein Unterdruckraum 104 und ein Raum mit Atmosphärendruck 105. Beide Räume sind durch einen Übersetzerkolben 106 getrennt. Wenn durch die Unterdruckleitung 107 Unterdruck im Raum 104 erzeugt wird, bewegt sich der mit der Dichtung 116 und Drosselbohrung 18 versehene Kolben 105 in Richtung des Pfeils 108. Die Hülse wird, wie im Zusammenhang mit Figur 3 dargestellt, arretiert.

110 ist ein pneumatisches Ventil, das den Unterdruck im Raum 104 steuert. Das pneumatische Ventil seinerseits wird durch den elektronischen Regler der Bremsdruckregelvorrichtung geschaltet. Die Rückstellung des Kolbens 105 erfolgt durch Belüftung über die Leitung 7 am Anschluß 17.

Auch beim Ausführungsbeispiel gemäß Figur 5 kann eine Drosselbohrung 18, analog zum Ausführungsbeispiel gemäß Figur 3, eingesetzt werden.

Im Vorangegangenen wurden mehrere Ausführungsbeispiele der Erfindung beschrieben. Die Erfindung ist nicht auf diese Ausführungsbeispiele beschränkt. So können auch andere Ausbildungen und Anordnungen der als Sperraggregat dienenden Hülse mit Querglied gewählt werden. Ebenso sind weitere Ausführungsformen der Arretiervorrichtung für die Hülse im Rahmen der Erfindung möglich. So kann eine Variation der Ausführungsformen nach den Figuren 3, 4, 5 gewählt werden, bei der ein Nachtreten des Bremspedals beziehungsweise ein Freilauf möglich ist. Eine Einsparung an Baulänge wird dadurch erzielt, daß die Arretiervorrichtung hinter die Hülse greift. Die Sperrvorrichtung kann auch statt, wie dargestellt, aus einem Element aus mehreren Elementen bestehen.

Liste der Einzelteile

1     Bremspedal
2     Modulator
3     Vorratsbehälter
4     Rücklaufleitung
5     elektonischer Regler
6     Anschlag
7     Elektromotor
8     Pumpe
9     Vakuumbremskraftverstärker
10    Druckraum
11    Arbeitskolben
12    Arbeitskolben
13    Nachlaufraum
14    Nachlaufbohrung
15    Druckraum
16    Tandemhauptzylinder
17    Anschluß
18    Drosselbohrung
19    hydraulische Leitung
20    hydraulische Leitung
21    Druckkreis
22    Druckkreis
23    SO-Ventil
24    SO-Ventil
25    SO-Ventil
26    SO-Ventil
27    Radbremse
28    Radbremse
29    Radbremse
30    Radbremse
31    SG-Ventil
32    SG-Ventil
33    SG-Ventil
34    SG-Ventil
35    Rückflußleitung
36    Sensor
37    Sensor
38    Sensor
39    Sensor
40    Eingang
41    Eingang
42    Eingang
43    Eingang
44    Ausgang
45    Ausgang
46    Ausgang
47    Ausgang
48    Ausgang
49    Druckleitung
50    Druckleitung
51    Druckleitung
52    innere Bohrung
53    Schließkörper
54    Ventilsitz
55    Stößel
56    Querstift
57    Radialbohrung
58    Leitung
59    Druckraum
60    Hauptzylinderboden
61    Kolben
62    Druckstange
63    Dichtung
64    Feder
65    Distanzstück
66    Aussparung
67    hintere Wand
68    Gehäuseteil
69    Hauptzylinder

| | |
|---|---|
| 70 | Hülse |
| 71 | Querstift |
| 72 | Stößel |
| 73 | Kugel |
| 74 | Ventilsitz |
| 75 | Feder |
| 76 | Kolbenschaft |
| 77 | Kolbenende |
| 78 | Dichtung |
| 79 | Arbeitsraum |
| 80 | Ausnehmung |
| 81 | Gehäuseansatz |
| 82 | Dichtung |
| 83 | Verschlußkörper |
| 84 | Druckraum |
| 85 | Übersetzerkolben |
| 86 | Kolben |
| 87 | Verschlußstück |
| 88 | Druckstange |
| 89 | Raum |
| 90 | Wand |
| 91 | Kanal |
| 92 | Ringraum |
| 93 | Ringraum |
| 94 | Kanal |
| 95 | Kolben |
| 96 | Spule |
| 97 | Luftspalt |
| 98 | Anker |
| 99 | Polkern |
| 100 | Pfeil |
| 101 | Gehäuse |
| 102 | Hauptzylindergehäuse |
| 103 | Ansatz |
| 104 | Raum |
| 105 | Raum |
| 106 | Kolben |
| 107 | Leitung |
| 108 | Pfeil |
| 109 | Kolben |
| 110 | Ventil |
| 111 | Öffnung |
| 112 | Drosselbohrung |
| 113 | Dichtung |
| 114 | Dichtung |
| 115 | Feder |
| 116 | Dichtung |

**Patentansprüche**

1. Bremsdruckregelvorrichtung, insbesondere Antiblockierregelvorrichtung, Antriebsschlupfregelvorrichtung, Anfahrschlupfregelvorrichtung für hydraulische Bremsanlagen von Kraftfahrzeugen, bestehend aus einem Hauptzylinder (16) mit mindestens einem Arbeitskolben, (Druckstangenkolben (11) und/oder schwimmender Kolben (12)) und mindestens einem Arbeitsraum (10, 15), einem Vorratsbehälter (3) für Druckmittel, einem Druckmodulator (2) für die Veränderung des hydraulischen Drucks in den Radzylindern der Radbremsen (27, 28, 29, 30) während des Bremsdruckregelmodus, wobei der Druckmodulator (2) Ein- und Auslaßventile (23 bis 26, 31 bis 34) für die Radzylinder umfaßt, einem elektronischen Regler (5) für die Steuerung der Ventile des Modulators, mindestens einer motorgetriebenen Pumpe (8) zur Erzeugung eines hydraulischen Drucks, wobei im Bremsdruckregelmodus der Arbeitsraum (10, 15) des Hauptzylinders mit Pumpendruck beaufschlagt wird, und der Arbeitskolben (11, 12) des Hauptzylinders infolge des Pumpendrucks in Richtung auf seine Grundstellung bewegbar ist, wobei in mindestens einem Arbeitskolben (11, 12) ein Regelventil (53, 54) vorgesehen ist, das im Bremsdruckregelmodus den Druckmittelstrom im hydraulischen Umlaufsystem, bestehend aus Pumpe (8), Arbeitsraum (10, 15) des Hauptzylinders, Vorratsbehälter (3), regelt (Druckmittelstromregelung), dadurch **gekennzeichnet**, daß Mittel vorgesehen sind, die im Bremsdruckregelmodus die Schaltpositionen des im Arbeitskolben (11, 12) (Druckstangenkolben (11) und/oder schwimmender Kolben (12)) untergebrachten Regelventils (53, 54) in den Hauptzylinder (16) hinein verschieben.

2. Bremsdruckregelvorrichtung nach Anspruch 1, wobei das Regelventil aus einem Ventilsitz (54), einem Ventilschließkörper (53), einem auf den Ventilkörper wirkenden, das Regelventil öffnenden Stößel (55) und einem Anschlag für den Stößel (55) besteht, dadurch **gekennzeichnet**, daß der Anschlag für den Stößel (55) im Bremsdruckregelmodus um bestimmte Strecken aus seiner Grundstellung in den Hauptzylinder (16) hinein bewegbar angeordnet ist, so daß im Bremsdruckregelmodus die Druckmittelstromregelung im hydraulischen Umlaufsystem bei Stellungen des Arbeitskolbens (11, 12) stattfindet, die in den Hauptzylinder (16) hinein verlagert sind.

3. Bremsdruckregelvorrichtung nach den Ansprüchen 1 und 2, dadurch **gekennzeichnet**, daß hydraulische Betätigungsmittel, insbesondere eine hydraulische Kolbenzylindereinheit, die durch den Pumpendruck beaufschlagbar ist, vorgesehen sind, die den Anschlag für den Stößel (55) in Richtung in den Hauptzylinder (16) hinein, mit Abstand vor seiner Grundstellung positionieren.

4. Bremsdruckregelvorrichtung nach einem oder mehreren der vorangegangenen Ansprüche, dadurch **gekennzeichnet**, daß der Anschlag für den Stößel aus einer Anschlagvorrichtung besteht, die einen beweglichen direkten Anschlagkörper (56) und einen beweglichen indirekten Anschlagkörper (61) umfaßt.

5. Bremsdruckregelvorrichtung nach einem oder mehreren der vorangegangenen Ansprüche, dadurch **gekennzeichnet**, daß der bewegliche Anschlagkörper (61) einerseits durch den Pumpendruck und andererseits durch die Kraft eines Federelements (64) positionierbar angeordnet ist.

6. Bremsdruckregelvorrichtung nach einem oder mehreren der vorangegangenen Ansprüche, dadurch **gekennzeichnet**, daß im Hauptzylinder ein gesonderter Druckraum (59) vorgesehen ist, der durch den beweglichen Anschlagkörper (61) begrenzt und in seinem Volumen veränderbar ist.

7. Bremsdruckregelvorrichtung nach einem oder mehreren der vorangegangenen Ansprüche, dadurch **gekennzeichnet,** daß der bewegliche Anschlagkörper (61) als Kolben ausgebildet ist, der durch den Pumpendruck gegen die Kraft einer Feder (64) verschiebbar angeordnet ist.

8. Bremsdruckregelvorrichtung nach einem oder mehreren der vorangegangenen Ansprüche, die als integralen Bestandteil einen Bremskraftverstärker, insbesondere einen Vakuumbremskraftverstärker aufweist, dadurch **gekennzeichnet**, daß im Hauptzylinder (16) ein gesonderter Druckraum (59) vorgesehen ist, der aus dem Hauptzylindergehäuse, einem verschiebbaren Kolben (61) und dem Kraftübertragungselement (62) des Bremskraftverstärkers (9) gebildet wird.

9. Bremsdruckregelvorrichtung nach den Ansprüchen 1 und 2, dadurch **gekennzeichnet**, daß ein mechanisches Sperraggregat vorgesehen ist, das durch eine Arretiervorrichtung in einer oder mehreren Positionen arretiert werden kann und aus einer im Hauptzylinder untergebrachten Hülse(70) mit einem Anschlagelement für den Stößel des Regelventils (72) besteht, wobei das Anschlagelement vorzugsweise aus einer quer zur Achse des Hauptzylinders (79) angeordneten, insbesondere stiftförmigausgebildeten, Bauteil (Querglied) (71) besteht, das innerhalb der Hülse (70) angeordnet ist.

10. Bremsdruckregelvorrichtung nach einem oder mehreren der vorangegangenen Ansprüche, dadurch **gekennzeichnet**, daß im Hauptzylindergehäuse ein, insbesondere radial, gegen die Hülse (70) verschiebbare Arretiervorrichtung (86) vorgesehen ist, die die Hülse (70) in einer oder in mehreren Positionen kraftschlüssig, insbesondere durch Verklemmen, arretiert.

11. Bremsdruckregelvorrichtung nach einem oder Mehreren der vorangegangenen Ansprüche 1 bis 9, dadurch **gekennzeichnet**, daß im Hauptzylindergehäuse eine, insbesondere radial, gegen die Hülse (70) verschiebbare Arretiervorrichtung vorgesehen ist, die die Hülse (70) in einer oder in mehreren Positionen formschlüssig, insbesondere durch Einrasten in Profile arretiert, wobei die Hülse (70) vorzugsweise ein sägezahnförmiges Außenprofil aufweist.

12. Bremsdruckregelvorrichtung nach einem oder mehreren der vorangegangenen Ansprüche, dadurch **gekennzeichnet**, daß die Arretiervorrichtung als Kolben (86) ausgebildet ist, der in der Hauptzylinderwand geführt und durch eine hydraulische Kolbenzylindereinheit (85, 84) verschiebbar ist, wobei die Kolbenzylindereinheit durch das Druckmittel der Pumpe im Bremsdruckregelmodus beaufschlagt wird.

13. Bremsdruckregelvorrichtung nach einem oder mehreren der vorangegangenen Ansprüche, dadurch **gekennzeichnet**, daß die Arretiervorrichtung als Kolben (95) ausgebildet ist, der in der Hauptzylinderwand (102) geführt und durch eine elektromagnetische Hubeinheit, insbesondere durch einen Hubmagneten (96, 100, 101), verschiebbar angeordnet ist, wobei die Hubeinheit durch den elektronischen Regler der Bremsdruckregelvorrichtung gesteuert wird.

14. Bremsdruckregelvorrichtung nach einem oder mehreren der vorangegangenen Ansprüche, dadurch **gekennzeichnet**, daß die Arretiervorrichtung als Kolben (109) ausgebildet ist, der in der Hauptzylinderwand (102) geführt und durch die Kraft eines pneumatischen Übersetzers (104, 106) verschiebbar ist, der die Differenz des atmosphärischen Drucks einerseits und des Unterdrucks im Ansaugstutzen des Verbrennungsmotors des Kraftfahrzeugs oder einer Vakuumpumpe andererseits in eine translatorische Kraft übersetzt und auf den Kolben (109) überträgt, wobei der pneumatische Übersetzer durch den elektronischen Regler der Bremsdruckregelvorrichtung gesteuert wird.

## Claims

1. A braking pressure regulating device, in particular an anti-lock control device, traction slip control device for hydraulic brake systems of automotive vehicles, comprising a master cylinder (16) with at least one working piston, (push rod piston (11) and/or floating piston (12)) and at least one working chamber (10, 15), a supply reservoir (3) for pressure fluid, a pressure modulator (2) for the variation of the hydraulic pressure in the wheel cylinders of the wheel brakes (27, 28, 29, 30) during the braking pressure control mode, the said pressure modulator (2) including inlet and outlet valves (23 to 25, 31 to 34) for the wheel cylinders, an electronic control unit (5) for the control of the valves of the modulator, at least one motor-driven pump (8) for generating a hydraulic pressure, the working chamber (10, 15) of the master cylinder being applied by pump pressure in the braking pressure control mode and the working piston (11, 12) of the master cylinder being movable in the direction of its initial position caused by the pump pressure, a regulating valve (53, 54) being provided in at least one working piston (11, 12) which, in the braking pressure control mode, regulates the pressure fluid flow in the hydraulic fluid cycle that is composed of pump (8), working chamber (10, 15) of the master cylinder, supply reservoir (3) (pressure fluid flow control), **characterized** in that means are provided which, in the braking pressure control mode, displace the switching positions of the regulating valve (53, 54) incorporated in the working piston (11, 12) (push rod piston (11) and/or floating piston (12)) into the master cylinder (16).

2. A braking pressure regulating device as claimed in claim 1, wherein the regulating valve is composed of a valve seat (54), a valve closure member (53), a tappet (55) acting upon the valve member and opening the regulating valve, as well as a stop for the tappet (55), **characterized** in that, in the braking pressure control mode, the stop for the tappet (55) is arranged to move by predefined distances away from its initial position into the master cylinder (16) so that in the braking pressure control mode the pressure fluid flow control in the hydraulic fluid cycle takes place at positions of the working piston (11, 12) which are displaced into the master cylinder (16).

3. A braking pressure regulating device as claimed in claims 1 and 2, **characterized** in that hydraulic actuating means, in particular a hydraulic piston-cylinder assembly to which the pump pressure can be applied, is provided which positions the stop for the tappet (55) in the direction into the master cylinder (16) at a distance in front of its initial position.

4. A braking pressure regulating device as claimed in any one or more of the preceding claims, **characterized** in that the stop for the tappet consists of a stop device which comprises a movable direct stop member (56) and a movable indirect stop member (61).

5. A braking pressure regulating device as claimed in any one or more of the preceding claims, **characterized** in that the movable stop member (61) is arranged in a manner able to be positioned by the pump pressure, on the one hand, and by the force of a spring element (64), on the other hand.

6. A braking pressure regulating device as claimed in any one or more of the preceding claims, **characterized** in that a separate pressure chamber (59) is provided in the master cylinder which is confined by the movable stop member (61) and is variable in its volume.

7. A braking pressure regulating device as claimed in any one or more of the preceding claims, **characterized** in that the movable stop member (61) is designed as a piston which is arranged in a way displaceable by the pump pressure in opposition to the force of a spring (64).

8. A braking pressure regulating device as claimed in any one or more of the preceding claims which, as an integral component part, comprises a brake power booster, in particular a vacuum brake power booster, **characterized** in that a separate pressure chamber (59) is provided in the master cylinder (16) which is formed of the master cylinder housing, a displaceable piston (61) and the force-transmitting element (62) of the brake power booster (9).

9. A braking pressure regulating device as claimed in claims 1 and 2, **characterized** in that a mechanical blocking unit is provided which can be fixed in one or more positions by a fixing mechanism and is composed of a sleeve (70) accommodated in the master cylinder and having a stop element for the tappet of the regulating valve (72), the said stop element being preferably composed of a component part (cross member) (71) which is placed crossly to the axis of the master cylinder (79) and is designed in particular like a pin, and which is located within said sleeve (70).

10. A braking pressure regulating device as claimed in any one or more of the preceding claims, **characterized** in that a fixing mechanism (86) is arranged in the master cylinder housing, in particular displaceable radially in opposition to the sleeve (70), which fixes the sleeve (70) in one or more positions by operative engagement, more particularly by jamming.

11. A braking pressure regulating device as claimed in any one or more of the preceding claims 1 to 9, **characterized** in that a fixing mechanism (86) is arranged in the master cylinder housing, in particular displaceable radially in opposition to the sleeve (70), which fixes the sleeve (70) in one or more positions by positive engagement, more particularly by catching into profiles, the said sleeve (70) having preferably a saw-tooth-shaped external profile.

12. A braking pressure regulating device as claimed in any one or more of the preceding claims, **characterized** in that the fixing mechanism is designed as a piston (86) which is guided in the master cylinder wall and is slidable by a hydraulic piston-cylinder assembly (85, 84), with the piston-cylinder assembly being acted upon by the pressure fluid of the pump in the braking pressure control mode.

13. A braking pressure regulating device as claimed in any one or more of the preceding claims, **characterized** in that the fixing mechanism is designed as a piston (95) which is guided in the master cylinder wall (102) and is arranged in a fashion displaceable by an electromagnetic lifting mechanism, in particular by a magnet (96, 100, 101), with the said lifting mechanism being controlled by the electronic control unit of the braking pressure regulating device.

14. A braking pressure regulating device as claimed in any one or more of the preceding claims, **characterized** in that the fixing mechanism is designed as a piston (109) which is guided in the master cylinder wall (102) and which is displaceable by the force of a pneumatic converter (104, 106) which converts the difference between the atmospheric pressure on the one hand, and the pressure below atmospheric pressure in the suction pipe of the internal combustion engine of the automotive vehicle or a vacuum pump, on the other hand, into a translatory force and transmits it onto the piston (109), the said pneumatic converter being controlled by the electronic control unit of the braking pressure regulating device.

**Revendications**

1. Dispositif de régulation de pression de freinage, notamment de dispositif de régulation antiblocage, dispositif de régulation du glissement de traction ou dispositif de régulation du glissement de démarrage, pour système hydraulique de freinage de véhicule à moteur, constitué d'un maître-cylindre (16), comportant au moins un piston de travail (piston à tige de pression (11) et/ou piston flottant (12)) et au moins une chambre de travail (10, 15), d'un réservoir (3) de stockage d'agent de pression, d'un modulateur de pression (2), servant à faire varier la pression hydraulique dans les cylindres de roues des freins de roues (27, 28, 29, 30) pendant le mode de régulation de pression de freinage, ce modulateur de pression (2) comprenant des valves d'entrée (23 à 25) et des valves de sortie (31 à 34) associées aux cylindres de roues, d'un régulateur électronique (5), servant à commander ces valves du modulateur, et d'au moins une pompe (8), entraînée par un moteur et servant à produire une pression hydraulique, la chambre de travail (10, 15) du maître-cylindre étant soumise à l'action de la pression de la pompe dans le mode de régulation de pression de freinage et le piston de travail (11, 12) du maître-cylindre pouvant être déplacé en direction de sa position initiale sous l'action de cette pression de la pompe, tandis qu'il est prévu, dans au moins un piston de travail (11, 12), une valve de régulation (53, 54) qui, dans le mode de régulation de pression de freinage, assure la régulation du débit d'agent de pression dans le système de circulation hydraulique constitué de la pompe (8), de la chambre de travail (10, 15) du maître-cylindre et du réservoir de stockage (3) (régulation du débit d'agent de pression), caractérisé en ce qu'il est prévu des moyens qui, dans le mode de régulation de pression de freinage, déplacent dans le maître-cylindre (16) les positions de commutation de la valve de régulation (53, 54) disposée dans le piston de travail (11, 12) (piston à tige de pression (11) et/ou piston flottant (12)).

2. Dispositif de régulation de pression de freinage suivant la revendication 1, dans lequel la valve de régulation est constituée d'un siège de valve (54), d'un corps de fermeture de valve (53), d'un poussoir (55), agissant sur ce corps de valve et ouvrant la valve de régulation, et d'une butée prévue pour ce poussoir (55), caractérisé en ce que la butée prévue pour le poussoir (55) est disposée de façon à pouvoir se déplacer dans le maître-cylindre (16), dans le mode de régulation de pression de freinage, sur des distances déterminées à partie de sa position initiale, de façon telle que, dans ce mode de régulation de pression de freinage, la régulation du débit d'agent de pression dans le système de circulation hydraulique ait lieu au moyen de positions du piston de travail (11, 12) qui sont décalées dans le maître-cylindre (16).

3. Dispositif de régulation de pression de freinage suivant l'une des revendications 1 et 2, caractérisé en ce qu'il est prévu des moyens hydrauliques d'actionnement, notamment un ensemble hydraulique piston-cylindre qui est agencé de façon à pouvoir être soumis à l'action de la pression de la pompe, ces moyens positionnant la butée, prévue pour le poussoir (55), suivant la direction du maître-cylindre (16) et à distance de sa position initiale.

4. Dispositif de régulation de pression de freinage suivant une ou plusieurs des revendications précédentes, caractérisé en ce que la butée prévue pour le poussoir consiste en un dispositif de butée qui comprend un corps de butée (56) déplaçable d'une manière directe et un corps de butée (61) déplaçable d'une manière indirecte.

5. Dispositif de régulation de pression de freinage suivant une ou plusieurs des revendications précédentes, caractérisé en ce que le corps de butée (61) déplaçable est agencé de façon à pouvoir être positionné, d'une part, par la pression de la pompe et, d'autre part, par la force d'un élément élastique (64).

6. Dispositif de régulation de pression de freinage suivant une ou plusieurs des revendications précédentes, caractérisé en ce que, dans le maître-cylindre, il est prévu une chambre séparée de pression (59) qui est limitée par le corps de butée (61) déplaçable et qui est agencée de façon que son volume soit variable.

7. Dispositif de régulation de pression de freinage suivant une ou plusieurs des revendications précédentes, caractérisé en ce que le corps de butée (61) déplaçable est réalisé sous la forme d'un piston qui est disposé de façon à pouvoir être déplacé par la pression de la pompe à l'encontre de la force d'un ressort (64).

8. Dispositif de régulation de pression de freinage suivant une ou plusieurs des revendications précédentes, qui comprend, en tant qu'élément constitutif faisant partie de l'ensemble, un amplificateur d'effort de freinage, notamment un amplificateur d'effort de freinage à dépression, caractérisé en ce que, dans le maître-cylindre (16), il est prévu une chambre séparée de pression (59) qui est formée par le boîtier de maître-cylindre, un piston déplaçable (61) et l'élément de transmission d'effort (62) de l'amplificateur d'effort de freinage (9).

9. Dispositif de régulation de pression de freinage suivant l'une des revendications 1 et 2, caractérisé en ce qu'il est prévu un ensemble mécanique de blocage qui est immobilisé par un dispositif d'immobilisation dans une ou plusieurs positions et qui consiste en une douille (70) comportant un élément de butée pour le poussoir de la valve de regulation (72), cet élément de butée consistant de préférence en une pièce (organe transversal) (71) qui est disposée transversalement à l'axe du maître-cylindre (79) et à l'intérieur de la douille (70) et qui est réalisée notamment sous la forme d'une tige.

10. Dispositif de régulation de pression de freinage suivant une ou plusieurs des revendications précédentes, caractérisé en ce que, dans le boîtier du maître-cylindre, il est prévu un dispositif d'immobilisation (86) qui est agencé de façon à pouvoir se déplacer, notamment d'une manière radiale, en appui sur la douille (70) et qui immobilise cette douille (70) dans une ou plusieurs positions par application d'une force, notamment par coincement.

11. Dispositif de régulation de pression de freinage suivant une ou plusieurs des revendications précédentes 1 à 9, caractérisé en ce que, dans le boîtier du cylindre de frein, il est prévu un dispositif d'immobilisation qui est agencé de façon à pouvoir être déplacé, notamment d'une manière radiale, en appui sur la douille (70) et qui immobilise cette dernière dans une ou plusieurs positions par complémentarité de formes, notamment par enclenchement dans des éléments profilés, la douille (70) comportant de préférence un profil extérieur en forme de dents de scie.

12. Dispositif de régulation de pression de freinage suivant une ou plusieurs des revendications précédentes, caractérisé en ce que le dispositif d'immobilisation est réalisé sous la forme d'un piston (86) qui est guidé dans la paroi du maître-cylindre et qui est agencé de façon à pouvoir être déplacé au moyen d'un ensemble hydraulique piston-cylindre (85, 84), cet ensemble piston-cylindre étant soumis, dans le mode de régulation de pression de freinage, à l'action de l'agent de pression de la pompe.

13. Dispositif de régulation de pression de freinage suivant une ou plusieurs des revendications précédentes, caractérisé en ce que le dispositif d'immobilisation est réalisé sous la forme d'un piston (95) qui est guidé dans la paroi de maître-cylindre (102) et qui est disposé de façon à pouvoir être déplacé au moyen d'un ensemble électromagnétique de poussée, notamment au moyen d'un aimant de poussée (96, 100, 101), cet ensemble de poussée étant commandé par le régulateur électronique du dispositif de régulation de pression de freinage.

14. Dispositif de régulation de pression de freinage suivant une ou plusieurs des revendications précédentes, caractérisé en ce que le dispositif d'immobilisation est réalisé sous la forme d'un piston (109) qui est guidé dans la paroi (102) du maître-cylindre et qui est agencé de façon à pouvoir être déplacé sous l'effet de la force d'un transformateur pneumatique (104, 106) qui transforme la différence existant entre, d'une part, la pression atmosphérique et, d'autre part, la dépression régnant dans le collecteur d'aspiration du moteur à combustion du véhicule à moteur, ou la dépression d'une pompe à dépression, en une force de translation qu'il transmet au piston (109), ce transformateur pneumatique étant commandé par le régulateur électronique du dispositif de régulation de pression de freinage.

Fig. 1

Fig. 2

EP 0 327 615 B1

Fig. 3

Fig. 4

EP 0 327 615 B1

Fig. 5